(19) Europäisches Patentamt / European Patent Office / Office européen des brevets

(11) **EP 3 379 203 B1**

(12) **FASCICULE DE BREVET EUROPEEN**

(45) Date de publication et mention
de la délivrance du brevet:
**13.11.2019 Bulletin 2019/46**

(51) Int Cl.:
***G01C 25/00*** *(2006.01)*   ***G01P 21/00*** *(2006.01)*

(21) Numéro de dépôt: **18162735.7**

(22) Date de dépôt: **20.03.2018**

(54) **PROCÉDÉ D'ESTIMATION DU BIAIS D'UN CAPTEUR**

SCHÄTZVERFAHREN DES BIAS-FEHLERS EINES SENSORS

METHOD FOR ESTIMATING THE BIAS OF A SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.03.2017 FR 1752268**

(43) Date de publication de la demande:
**26.09.2018 Bulletin 2018/39**

(73) Titulaire: **COMMISSARIAT À L'ÉNERGIE
ATOMIQUE ET AUX
ÉNERGIES ALTERNATIVES
75015 Paris (FR)**

(72) Inventeur: **VILLIEN, Christophe
38170 SEYSSINET-PARISET (FR)**

(74) Mandataire: **GIE Innovation Competence Group
310, avenue Berthelot
69372 Lyon Cedex 08 (FR)**

(56) Documents cités:
**EP-A1- 2 721 368       EP-A1- 3 006 897
US-A1- 2007 136 019    US-A1- 2011 172 820
US-A1- 2014 229 135**

## Description

### DOMAINE TECHNIQUE

Le domaine technique de l'invention concerne les capteurs de mouvements, de type gyromètres ou accéléromètres. L'objectif de l'invention est de traiter les signaux générés par ces capteurs en prenant en compte un biais, cela pour obtenir des mesures plus précises.

### ART ANTERIEUR

Les capteurs de mouvement se sont considérablement développés, notamment en raison de leur intégration dans des dispositifs nomades, et en particulier des dispositifs nomades connectés. Ces capteurs génèrent un signal, en différents instants de mesures, dépendant de leur mouvement auxdits instants de mesure. Parmi ces capteurs, citons par exemple les gyromètres, permettant d'obtenir une vitesse angulaire de rotation, selon un ou plusieurs angles de rotation, à partir de laquelle on peut estimer des angles de rotation du capteur.

Il est connu que les signaux générés par ce type de capteur peuvent être affectés d'un biais.. Il peut par exemple être causé par une imperfection du capteur, d'origine électrique ou mécanique. Dans le cas d'un gyromètre, le biais résulte par exemple d'une variation de température ou d'humidité de l'environnement dans lequel est placé le capteur, ou par une variation d'un courant d'alimentation du capteur. Ce biais peut varier avec le temps. C'est pourquoi il doit fréquemment être estimé de façon à obtenir des mesures suffisamment précises, ce qui permet de prendre en compte la variation temporelle du biais.

Des procédés ont été développés, visant à estimer le biais, de façon à pouvoir le prendre en compte. Une première solution repose sur une comparaison de l'information issue de différents types de capteurs. Le document US2011/0178707 décrit par exemple une estimation d'un biais affectant les mesures d'un gyromètre en estimant une vitesse angulaire à partir d'un magnétomètre et d'un accéléromètre. La vitesse angulaire ainsi estimée est comparée à la vitesse angulaire fournie par le gyromètre. La comparaison permet une détermination du biais affectant les valeurs mesurées par le gyromètre. Un tel procédé suppose toutefois la présence de capteurs de différents types ainsi que des opérations de calcul complexes.

Une deuxième solution est basée sur la détermination d'instants propices à la détermination du biais. Par exemple, le document EP0496172 décrit une estimation du biais d'un gyromètre du système de navigation d'un véhicule. Le biais du gyromètre est évalué lorsque le véhicule est à l'arrêt. Le document EP3006897 décrit une approche similaire.

Cette approche est également suivie dans US2011/0172820, ce document décrivant un procédé d'estimation d'un gyromètre embarqué sur un robot. Le biais du gyromètre est mis à jour lorsque le robot est considéré comme immobile. L'immobilité du robot correspond à un instant auquel les variations des mesures fournies par le gyromètre sont inférieures à un seuil. Lorsqu'un tel seuil est franchi, le robot est considéré comme immobile. Le biais du gyromètre est alors estimé par un calcul d'une valeur moyenne des signaux délivrés par le gyromètre alors que le robot est considéré comme immobile. Il est précisé, dans ce document, que le seuil est déterminé de façon théorique ou expérimentale. Le document US2014/0229135 décrit également une détermination du biais d'un gyromètre fixé à un équipement sportif. Le biais est mesuré lorsque l'équipement sportif est considéré comme immobile.

Une approche basée sur la détermination de plages d'immobilité du capteur est satisfaisante, car elle ne nécessite pas le recours à d'autres types de capteurs de mouvement. Cependant, la détection d'une plage d'immobilité est conditionnée par une prise en compte d'un seuil. Or, la détermination d'un tel seuil peut comporter plusieurs écueils : lorsque le seuil est trop élevé, le capteur est considéré comme immobile alors qu'il peut ne pas l'être totalement. Le biais est fréquemment mis à jour, mais peut être mal estimé, et en particulier surestimé si le capteur, considéré comme immobile, est toujours en mouvement. Lorsque le seuil est trop faible, le biais est correctement estimé, car cela correspond à des plages au cours desquelles le capteur est suffisamment immobile. Cependant, le biais peut ne pas être fréquemment mis à jour, et les mesures peuvent subir la variabilité du biais.

Le document US2007/0136019 décrit également un procédé pour estimer le biais d'un gyromètre embarqué sur un véhicule, dans lequel le biais du gyromètre est mis à jour à chaque fois qu'un indicateur de dispersion dérivé des signaux de sortie du gyromètre franchit un seuil de dispersion. Le document WO2012177323 décrit qu'un biais d'un gyroscope peut être mis à jour suite à une évolution de la température ou à l'issue d'une période temporelle définie à partir de la détection d'un profil Gaussien d'une distribution basée sur les signaux de sortie du gyroscope.

L'objectif de l'invention est de permettre une mise à jour précise du biais d'un capteur de mouvement aussi souvent que possible, sans nécessiter le recours à d'autres capteurs de mouvement.

### EXPOSE DE L'INVENTION

Un premier objet de l'invention est un procédé de traitement des signaux générés par un capteur, selon la revendication 1, chaque signal étant associé à un instant de mesure. Le procédé comporte, entre autres, les étapes suivantes :

a) durant une phase d'initialisation, définition d'un seuil de dispersion initial et éventuellement d'un biais initial, ce dernier pouvant être nul ;

b) acquisition d'un signal à un instant de mesure, à l'instant de mesure étant associés :

- un biais, déterminé au cours d'une itération précédente ou au cours de l'initialisation ;
- un seuil de dispersion, déterminé au cours d'une itération précédente ou au cours de l'initialisation ;

c) association d'une plage temporelle d'analyse à l'instant de mesure, et calcul d'un indicateur de dispersion, représentant une dispersion des signaux acquis pendant la plage temporelle d'analyse;
d) comparaison de l'indicateur de dispersion avec le seuil de dispersion associé à l'instant de mesure;
e) en fonction de la comparaison effectuée lors de l'étape d), maintien du biais à une valeur inchangée ou mise à jour du biais;
f) soustraction du biais résultant de l'étape e) au signal acquis lors de l'étape b) ;
g) réitération des étapes b) à f) en incrémentant l'instant de mesure ;

le procédé étant tel que lors de l'étape e), la mise à jour du biais comporte également une mise à jour du seuil de dispersion, en fonction de l'indicateur de dispersion calculé lors de l'étape d), audit instant de mesure.

Les itérations peuvent être effectuées à chaque instant de mesure, ou tous les *n* instants de mesure, *n* étant un entier supérieur à 1.

Le capteur peut en particulier être un capteur de mouvement, auquel cas les signaux générés par le capteur sont représentatifs d'un mouvement dudit capteur au cours du temps.

De préférence, lors de l'étape e), le biais est mis à jour lorsque l'indicateur de dispersion franchit le seuil de dispersion.

De préférence, lors de la mise à jour du seuil de dispersion, ce dernier est remplacé par l'indicateur de dispersion calculé à l'instant de mesure.

Selon un mode de réalisation, le biais initial est nul. Selon ce mode de réalisation, jusqu'à la première mise à jour du biais, aucun biais n'est soustrait des signaux mesurés. Selon un autre mode de réalisation, le biais initial est prédéterminé, par exemple au cours d'essais du capteur ou au cours d'une utilisation précédente du capteur.

Selon un mode de réalisation, l'indicateur de dispersion calculé lors de l'étape c) est d'autant plus élevé que les signaux formant la plage temporelle d'analyse ont des valeurs dispersées. Dans ce cas, lors de l'étape e), le biais est mis à jour lorsque l'indicateur de dispersion est inférieur au seuil de dispersion. Alternativement, l'indicateur de dispersion calculé lors de l'étape c) est d'autant plus faible que les signaux formant la plage temporelle d'analyse ont des valeurs dispersées, auquel cas lors de l'étape e), le biais est mis à jour lorsque l'indicateur de dispersion est supérieur au seuil de dispersion.

Selon l'invention, lorsque le biais est maintenu à une valeur inchangée, le seuil de dispersion est mis à jour, entre deux itérations successives, selon une fonction d'évolution. Ainsi, la valeur du seuil de dispersion peut varier au cours du temps, et plus particulièrement entre deux itérations successives.

Lors de l'étape d), l'indicateur de dispersion peut être calculé en fonction :

- d'un moment d'ordre supérieur à 1 d'une distribution des signaux acquis au cours de la plage temporelle d'analyse, le moment pouvant être un moment centré ou un moment centré réduit ;
- ou d'un écart entre une valeur maximale et une valeur minimale des signaux acquis au cours de la plage temporelle d'analyse.

Lors de l'étape e), la mise à jour du biais comprend l'association d'une plage temporelle d'estimation à l'instant de mesure, la mise à jour du biais étant réalisée en fonction d'une valeur représentative des signaux mesurés au cours de ladite plage temporelle d'estimation. L'étape e) peut alors comporter une estimation de la valeur moyenne ou de la valeur médiane des signaux générés par le capteur au cours de la plage temporelle d'estimation La plage temporelle d'estimation peut être identique à la plage temporelle d'analyse.

Le capteur peut notamment être un capteur de mouvement, le signal généré par le capteur à chaque instant de mesure étant représentatif d'un mouvement du capteur audit instant de mesure. Le capteur peut être un gyromètre ou un accéléromètre.

Selon un mode de réalisation, deux itérations successives sont effectuées tous les *n* instants de mesure, n étant un entier strictement supérieur à 1. Selon ce mode de réalisation, lors de l'étape g), l'instant de mesure est incrémenté de *n* incréments. Entre deux itérations, tout ou partie des signaux de mesures peuvent alors être mémorisés, en particulier durant la plage temporelle d'analyse et la plage temporelle d'estimation correspondant à l'itération suivante.

Un autre objet de l'invention est un capteur, selon la revendication 13, apte à délivrer un signal à différents instants de mesure, le capteur étant relié à un processeur configuré pour mettre en oeuvre les étapes b) à g) du procédé du premier objet de l'invention, à différents instants de mesure, après une phase d'initialisation correspondant à l'étape a) dudit procédé. Le capteur peut notamment être un capteur de mouvement apte à générer, à chaque instant de mesure, un signal représentatif d'un mouvement du capteur audit instant de mesure. Il peut en particulier s'agir d'un gyromètre.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif selon l'invention.

La figure 1B montre un exemple illustratif d'une évolution temporelle de signaux générés par un gyromètre.

La figure 1C montre l'évolution d'un indicateur de dispersion déterminé en fonction des signaux représentés sur la figure 1B. La figure 1C montre également différents instants de mise à jour du biais, ces instants étant définis selon un premier mode de réalisation.

La figure 2A schématise les principales étapes du premier mode de réalisation. La figure 2B schématise les principales étapes du procédé selon l'invention.

La figure 3A correspond à la figure 1C. La figure 3B montre l'évolution d'un indicateur de dispersion déterminé en fonction des signaux représentés sur la figure 1B. La figure 3A montre également différents instants de mise à jour du biais, ces instants étant définis selon le procédé de l'invention.

## EXPOSE DE MODES DE REALISATION PARTICULIERS

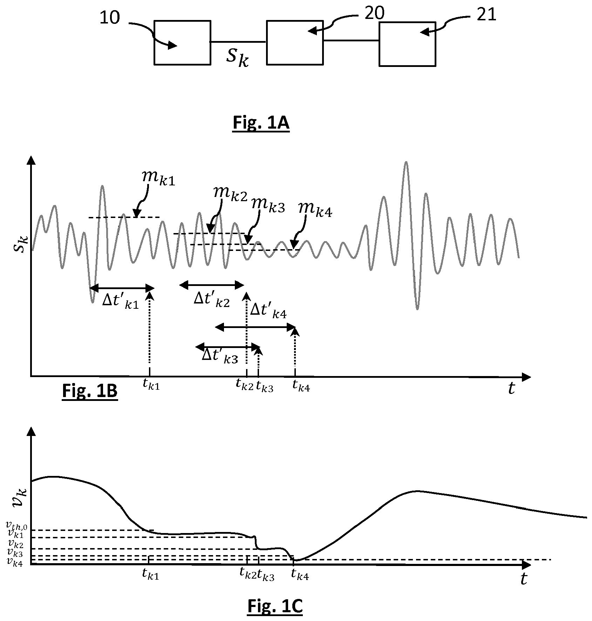

La figure 1A représente un exemple de dispositif selon l'invention. Un gyromètre 10 génère des signaux $s_k$ à différents instants de mesure $t_k$. Chaque signal $s_k$ est représentatif d'une vitesse angulaire autour d'un axe de rotation. Le gyromètre peut générer une vitesse angulaire autour de différents axes de rotation, par exemple trois axes de rotation, auquel cas il délivre simultanément, à chaque instant de mesure $t_k$, une vitesse angulaire autour de chaque axe de rotation.

Dans les exemples qui suivent, on considère une vitesse angulaire autour d'un axe de rotation, sachant que le procédé peut s'appliquer à plusieurs axes de rotation. Dans ce cas, le procédé peut s'appliquer indépendamment à chaque axe de rotation.

Le dispositif comporte un processeur 20 configuré pour acquérir les signaux $s_k$ délivrés par le gyromètre 10 et pour mettre en oeuvre les étapes décrites par la suite. Le processeur 20 est relié à une mémoire 21 comportant des instructions pour la mise en oeuvre desdites étapes.

La figure 1B montre une évolution temporelle de signaux $s_k$ générés par le gyromètre au cours du temps. Il s'agit de signaux discrets acquis selon une fréquence d'échantillonnage, cette dernière étant par exemple comprise entre 10 et 200 Hz. L'ensemble des signaux acquis forme la courbe représentée sur la figure 1B.

Au-delà d'une phase d'initialisation $\Delta t_0$, correspondant à des premiers signaux acquis, à chaque signal mesuré $s_k$ peut être affecté une plage temporelle d'analyse $\Delta t_k$, durant laquelle on peut calculer un indicateur dit de dispersion $v_k$. L'indicateur de dispersion $v_k$ est représentatif de la dispersion des signaux mesurés durant la plage temporelle d'analyse $\Delta t_k$ associée à l'instant de mesure $k$. L'objectif de l'indicateur de dispersion est de qualifier des instants d'immobilité, durant lesquels le capteur peut être considéré comme immobile. De même que dans l'art antérieur, c'est à de tels instants d'immobilité que le biais du capteur peut être estimé.

La plage temporelle d'analyse $\Delta t_k$ comporte des instants de mesure précédant un instant de mesure $t_k$. Par exemple, chaque plage temporelle d'analyse $\Delta t_k$ rassemble les instants $t_k...t_{k-K}$ où $k$ correspond à l'incrément de l'instant de mesure du signal $s_k$ et $K$ est un entier positif correspondant aux nombres d'instants de mesure formant la plage temporelle d'analyse $\Delta t_k$. $K$ est de préférence suffisamment élevé pour pouvoir estimer un indicateur de dispersion $v_k$ suffisamment représentatif de la dispersion des signaux de mesure au cours de la plage temporelle d'analyse $\Delta t_k$. $K$ dépend naturellement de la fréquence d'échantillonnage. Lorsque cette dernière est comprise entre 10 et 200 Hz, $K$ est de préférence compris entre 5 et 50, et par exemple égal à 30. La plage temporelle d'analyse $\Delta t_k$ s'étend typiquement entre 100 ms et 5s, et de préférence entre 100 ms et 1s. Cela permet une estimation suffisamment précise de la dispersion des signaux de mesure durant la plage temporelle d'analyse, tout en permettant une qualification de phases d'immobilité suffisamment brèves.

L'indicateur de dispersion $v_k$ associé à un instant de mesure $t_k$ peut être établi à partir de la variance $\sigma_k^2$ ou de l'écart type $\sigma_k$ des signaux mesurés $s_k$ durant la plage temporelle d'analyse $\Delta t_k$. Plus généralement, l'indicateur de dispersion $v_k$ correspondant à une plage temporelle d'analyse $\Delta t_k$ est établi à partir d'un indicateur statistique d'une distribution formée par les signaux mesurés $s_k$ durant ladite plage temporelle d'analyse. L'indicateur statistique peut être un moment de la distribution, en particulier un moment $m_r$ d'ordre $r$ strictement supérieur à 1 de la distribution. L'indicateur de dispersion peut par exemple être obtenu à partir moment centré réduit d'ordre 2 (écart-type), ou du coefficient d'asymétrie (moment centré réduit d'ordre 3, connu par le terme anglosaxon skewness) ou à partir du kurtosis (moment centré réduit d'ordre 4). Le terme moment englobe un moment centré ou un moment centré réduit.

L'indicateur de dispersion $v_k$ peut également être déterminé par une comparaison entre une valeur maximale $max_k$ et une valeur minimale $min_k$ des signaux $s_k$ mesurés durant une plage temporelle d'analyse $\Delta t_k$. La comparaison peut prendre la forme d'une soustraction ou d'un ratio.

Dans les exemples qui suivent, l'indicateur de dispersion $v_k$ associé à chaque instant de mesure $t_k$ (et

à chaque signal mesuré $s_k$) est l'écart-type des signaux mesurés pendant la plage d'analyse $\Delta t_k$ associée à l'instant de mesure $t_k$. La figure 1C schématise une évolution temporelle de l'indicateur de dispersion $v_k$ en se basant sur les signaux $s_k$ représentés sur la figure 1B.

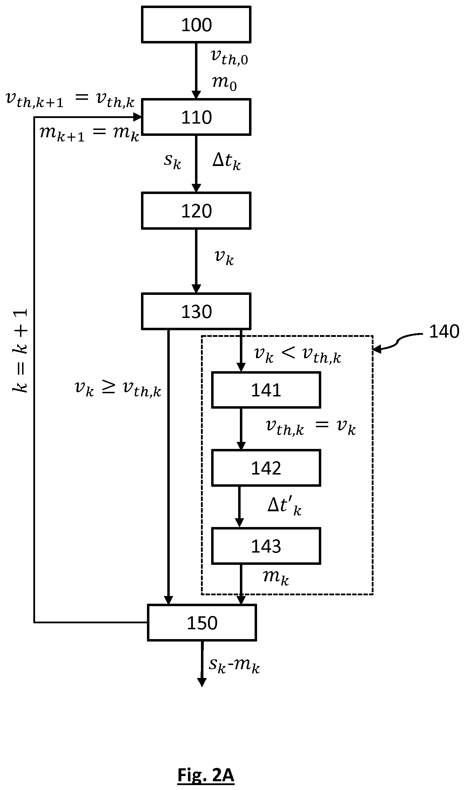

On va à présent décrire les principales étapes d'un premier mode de réalisation de l'invention, en lien avec la figure 2A.

Etape 100 : Initialisation.

Au cours d'une phase d'initialisation, correspondant par exemple aux premiers instants de l'utilisation du capteur 10, le biais du capteur est initialisé à une valeur initiale du biais $m_0$. La valeur initiale du biais peut être nulle ou être prédéterminée arbitrairement, par exemple à partir d'un biais mémorisé lors d'une utilisation préalable du capteur 10, ou à partir d'essais du capteur réalisés en usine.

L'initialisation comporte également l'affectation d'une valeur initiale à un seuil de dispersion $v_{th,0}$. Cette valeur peut être fixe ou résulter d'une utilisation préalable du capteur 10.

Suite à l'étape d'initialisation, les étapes 110 à 150 sont mises en oeuvre de façon itérative, chaque itération étant affectée d'un rang d'itération $k$. Lors de la première itération, $k = 1$.

Etape 110 : acquisition d'un signal $s_k$ généré par le gyromètre 10. Le signal $s_k$ est acquis à un instant de mesure $t_k$. A cet instant de mesure $t_k$ est associée une plage temporelle d'analyse $\Delta t_k$ telle que précédemment définie. Tant que $k < K$, la plage temporelle d'analyse est définie entre $t_{k,k=1}$ et l'instant de mesure $t_k$.

Etape 120 : calcul d'un indicateur de dispersion. On calcule un indicateur de dispersion $v_k$ des signaux $s_{k-K}...s_k$ mesurés au cours de la plage temporelle d'analyse $\Delta t_k$. Cet indicateur de dispersion correspond à l'instant de mesure $t_k$. Tant que $k < K$, l'indicateur de dispersion est soit considéré comme égal à une valeur arbitraire, soit établi dans la plage d'analyse définie lors de l'étape 110. Les signaux $s_{k-K}...s_k$ sont conservés dans une mémoire, jusqu'au calcul de l'indicateur de dispersion $v_k$.

Etape 130 : comparaison. L'indicateur de dispersion $v_k$ correspondant à l'instant de mesure $t_k$ est comparé au seuil de dispersion $v_{th,k}$, dit seuil de dispersion courant, associé à l'instant de mesure $t_k$. Lors de la première itération ($k = 1$), le seuil de dispersion $v_{th,k=1}$ correspond au seuil de dispersion initial $v_{th,0}$ déterminé au cours de la phase d'initialisation.

En fonction de la comparaison, soit une étape 140 de mise à jour du biais et du seuil de dispersion est déclenchée, soit on passe à l'étape 150 de correction du signal mesuré.

Lorsque l'indicateur de dispersion $v_k$ est d'autant plus élevé que la dispersion des signaux, dans la plage temporelle d'analyse $\Delta t_k$, est importante, ce qui correspond au cas représenté sur la figure 2A, l'étape 140 est déclenchée lorsque l'indicateur de dispersion est inférieur au seuil de dispersion courant $v_{th,k}$. Lorsque l'indicateur de dispersion $v_k$ est d'autant plus faible que la dispersion des signaux, dans la plage temporelle d'analyse $\Delta t_k$, est importante, l'étape 140 est déclenchée lorsque l'indicateur de dispersion est supérieur au seuil de dispersion courant $v_{th,k}$.

Etape 140 : Mise à jour du biais et du seuil de dispersion.

A chaque itération est associé un biais $m_k$, dit biais courant, destiné à être soustrait du signal mesuré $s_k$. Lors de la première itération ($k = 1$), le biais $m_{k=1}$ est le biais initial $m_0$ résultant de l'initialisation. L'étape 140 correspond à une mise à jour du biais à considérer. Cette étape est mise en oeuvre lorsque le capteur est considéré comme suffisamment immobile, sur la base de la comparaison effectuée lors de l'étape 130. Le terme suffisamment immobile décrit le fait que la mise à jour est déclenchée lorsque le capteur est considéré comme davantage immobile que lors de la précédente mise à jour. Elle comporte les sous-étapes suivantes :

Sous-étape 141 : mise à jour du seuil de dispersion : le seuil de dispersion courant $v_{th,k}$ est remplacé par la valeur de l'indicateur de dispersion $v_k$ calculée lors de l'étape 120.

Sous-étape 142 : définition d'une plage temporelle d'estimation $\Delta t'_k$, de façon à estimer le biais du capteur. La plage temporelle d'estimation $\Delta t'_k$ comporte des instants de mesure précédant l'instant $t_k$ d'obtention du signal $s_k$. Par exemple, chaque plage temporelle d'estimation rassemble les instants $t_{k}...t_{k-K}$, où $k$ est l'instant de mesure du signal $s_k$ et $K'$ est un entier positif correspondant aux nombres d'instants de mesure formant la plage temporelle d'estimation $\Delta t'_k$. $K'$ est de préférence compris entre 5 et 50, et par exemple égal à 30. La plage temporelle d'estimation est définie pour estimer une valeur du biais en fonction des signaux $s_k...s_{k-K'}$ mesurés durant ladite plage. Les signaux $s_k...s_{k-K'}$ sont conservés dans une mémoire jusqu'à l'éventuelle mise à jour du seuil de dispersion.

La plage temporelle d'estimation $\Delta t'_k$ peut être confondue avec la plage temporelle d'analyse $\Delta t_k$.

Sous-étape 143 : mise à jour du biais. Il s'agit de mettre à jour le biais courant $m_k$ à prendre en compte pour corriger le signal $s_k$ mesuré. Le biais est mis à jour en fonction d'un indicateur de type moyenne ou médiane des signaux $s_{k-K'}...s_k$ mesurés lors de la plage temporelle d'estimation $\Delta t'_k$. Dans cet exemple, le biais est mis à jour en fonction de la moyenne $\mu_k$ des signaux mesurés pendant la plage temporelle d'estimation $\Delta t'_k$.

Etape 150 : Correction du signal mesuré

Au cours de cette étape, le signal mesuré $s_k$ est corrigé en fonction du biais courant $m_k$, en particulier par une soustraction $s_k - m_k$. En fonction de la comparaison effectuée lors de l'étape 130, le biais courant $m_k$ résulte soit d'une itération précédente ou de la phase d'initialisation, soit de la mise à jour effectuée lors de l'étape 140. Lorsqu'au cours de l'initialisation, la valeur du biais initiale est nulle, ou qu'aucune valeur de biais initiale n'est définie, aucune correction du biais n'est effectuée lors de l'étape 150, jusqu'à une première mise à jour du biais.

Les étapes 110 à 150 sont réitérées en incrémentant le rang d'itération $k$. L'itération peut avoir lieu à chaque instant de mesure, auquel cas le rang d'itération est incrémenté de 1 de telle sorte que lors de l'itération suivante, $m_{k+1} = m_k$ et $v_{th,k+1} = v_{th,k}$. L'itération peut également être effectuée tous les $n$ instants de mesures $n$ étant un entier strictement supérieur à 1, de telle sorte qu'entre deux itérations successives, le capteur mesure $n$-1 signaux de mesure. Dans ce cas, $m_{k+n} = m_k$ et $v_{th,k+n} = v_{th,k}$. Tout ou partie des signaux mesurés entre deux itérations successives peuvent être mémorisés, en particulier les signaux mesurés durant les plages temporelles d'analyse et d'estimation prises en compte lors de chaque itération.

Les figures 1B et 1C permettent de visualiser l'effet du procédé. On a représenté sur ces figures quatre mises à jour successives du biais affectant les mesures. Suite à l'initialisation, le biais initial $m_0$ est considéré comme nul et le seuil de dispersion initial est $v_{th,0}$. A un instant $t_{k1}$, l'indicateur de dispersion $v_{k1}$ franchit le seuil initial $v_{th,0}$. Une première estimation $m_{k1}$ du biais est effectuée en considérant une plage temporelle d'estimation $\Delta t'_{k1}$. A partir de cet instant, le seuil de dispersion courant $v_{th,k}$ est remplacé par l'indicateur de dispersion $v_{k1}$ à l'instant $t_{k1}$.

A un instant $t_{k2}$, l'indicateur de dispersion $v_{k2}$ franchit le seuil de dispersion $v_{th,k2} = v_{k1}$. Une deuxième estimation $m_{k2}$ du biais est effectuée en considérant une plage temporelle d'estimation $\Delta t'_{k2}$. A partir de cet instant, le seuil de dispersion $v_{th,k}$ est remplacé par l'indicateur de dispersion $v_{k2}$ à l'instant $t_{k2}$. A un instant $t_{k3}$, l'indicateur de dispersion $v_{k3}$ franchit le seuil de dispersion $v_{th,k3} = v_{k2}$. Une troisième estimation $m_{k3}$ du biais est effectuée en considérant une plage temporelle d'estimation $\Delta t'_{k3}$. A partir de cet instant, le seuil de dispersion $v_{th,k}$ est remplacé par l'indicateur de dispersion $v_{k3}$ à l'instant $t_{k3}$. Selon les mêmes principes, une nouvelle mise à jour $m_{k4}$ du biais et du seuil de dispersion $v_{th,k4} = v_3$ est effectuée à l'instant $t_{k4}$. A partir de cet instant, le seuil de dispersion $v_{th,k}$ est remplacé par l'indicateur de dispersion $v_{k4}$. à l'instant $t_{k4}$.

Un aspect important du procédé est le remplacement du seuil de dispersion $v_{th,k}$ par l'indicateur de dispersion $v_k$ associé à l'instant de mise à jour $t_k$. Dans l'exemple considéré, dans lequel la mise à jour est effectuée lorsque l'indicateur de dispersion est inférieur au seuil de dispersion, cela conduit à une diminution progressive de la valeur du seuil de dispersion, de telle sorte que le seuil de dispersion après une mise à jour est nécessairement inférieur au seuil de dispersion avant la mise à jour. Cela apparaît sur la figure 1C, sur laquelle on observe que :

$$v_{th,k0} > v_{k1} > v_{k2} > v_{k3} > v_{k4}.$$

Lorsque l'indicateur de dispersion est d'autant plus élevé que la dispersion est faible (par exemple en considérant un indicateur de dispersion égal à l'inverse de l'écart type), l'étape 140 est effectuée lorsque l'indicateur de dispersion dépasse le seuil de dispersion. Dans ce cas, le procédé tend à augmenter progressivement la valeur du seuil de dispersion.

D'une façon générale, le procédé tend à attribuer, à chaque biais mis à jour, un indicateur de pertinence, ce dernier correspondant au seuil de dispersion simultanément mis à jour. Un biais n'est mis à jour que si des conditions plus propices à un renouvellement du biais se présentent. De telles conditions se traduisant par un indicateur de dispersion répresentatif d'une dispersion des signaux de mesure moindre que lors de la précédente mise à jour.

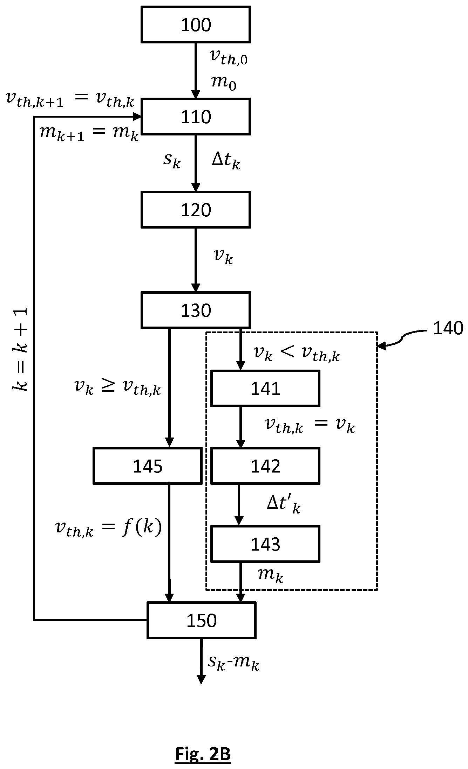

Dans l'exemple représenté sur les figures 1B et 1C, lorsque $t_k > t_{k4}$, l'indicateur de dispersion $v_k$ augmente. Le seuil de dispersion étant faible ($v_{th,k} = v_{k4}$), aucune autre mise à jour n'est alors effectuée. Une telle situation peut conduire à un écart temporel important entre deux mises à jour du biais successives. Aussi, selon l'invention, le seuil de dispersion peut évoluer dans le temps, de manière à moduler progressivement la condition de mise à jour du biais. Ainsi, le seuil de dispersion ne prend pas une valeur fixe, comme dans le premier mode de réalisation, mais peut évoluer progressivement, entre deux incréments temporels successifs, selon une fonction temporelle d'évolution $f(t_k)$. Par exemple, le seuil de dispersion peut être constant durant quelques centaines ou milliers d'incréments $k$, puis peut progressivement augmenter de façon à autoriser une nouvelle mise à jour. Cela permet de relâcher la condition de stabilité des signaux mesurés autorisant la mise à jour. La figure 2B illustre les principales étapes du procédé selon l'invention.

Les étapes présentées sont identiques à celles décrites auparavant. Le procédé comporte une étape 145 d'évolution du seuil de dispersion en fonction de la fonction d'évolution f. Ainsi, suite à l'étape 140 :

- soit le biais est mis à jour, de même que le seuil de dispersion (étapes 141 à 143) ;
- soit le biais n'est pas mis à jour, auquel cas l'étape 145 permet un ajustement de la valeur du seuil de dispersion.

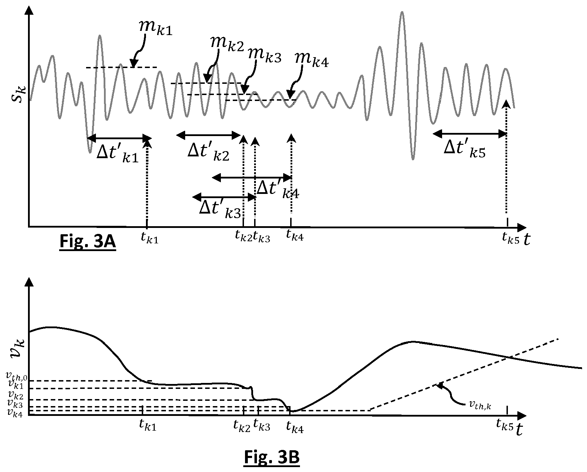

Les figures 3A et 3B illustrent le procédé selon l'invention. La figure 3A correspond à une évolution du signal mesuré similaire à celle représentée sur la figure 1B. La figure 3B montre l'évolution temporelle de l'indicateur de dispersion, de façon analogue à la figure 1C. Le biais ainsi que le seuil de dispersion est mis à jour comme détaillé ci-dessus, en lien avec la figure 1C. Suite à l'instant $t_{k4}$, le seuil de dispersion $v_{th,k}$ reste momentanément constant, et égal à $v_{k4}$, puis augmente progressivement de façon linéaire. Cela permet d'effectuer une mise à jour à un instant $t_{k5}$, lorsque l'indicateur de dispersion $v_{k5}$ est tel que $v_{k5} = v_{th,k5} = f(t_{k5})$. Le recours à un tel ajustement progressif du seuil de dispersion permet d'éviter que deux mises à jour successives du biais soient trop éloignées dans le temps. Cela favorise une prise en compte de la variabilité temporelle du biais.

Bien que décrite en lien avec un gyromètre, l'invention pourra être appliquée à d'autres capteurs nécessitant une mise à jour régulière d'un biais, qu'il s'agisse de capteurs de mouvements ou d'autres types de capteur. Dans le domaine des capteurs de mouvements, l'invention pourra s'appliquer à un gyromètre, comme décrit dans l'exemple ci-dessus, mais également à un magnétomètre, en particulier lorsqu'ils sont configurés pour délivrer une mesure de référence lorsqu'ils sont immobiles, la mesure de référence étant connue. Dans les exemples décrits ci-avant, la mesure de référence est égale à zéro lorsque le gyromètre est immobile. La méthode peut s'appliquer à un axe vertical d'un accéléromètre, la valeur de référence étant la gravité. Dans ce cas, lors d'une plage d'immobilité du capteur, correspondant à la plage d'estimation précédemment décrite, la moyenne des mesures correspond à la somme de la gravité et du biais. Le biais est donc obtenu en soustrayant la gravité à la moyenne des mesures durant la plage d'estimation.

L'invention pourra s'appliquer à des capteurs de mouvement équipant des dispositifs nomades, par exemple des smartphones, des montres, ou des objets connectés.

## Revendications

1. Procédé de traitement de signaux générés par un capteur (10), chaque signal ($s_k$) étant associé à un instant de mesure ($t_k$), le procédé comportant les étapes suivantes :

   a) durant une phase d'initialisation, définition d'un seuil de dispersion initial ($v_{th,0}$) et d'un biais initial, ce dernier pouvant être nul ;
   b) acquisition d'un signal ($s_k$) à un instant de mesure ($t_k$), à l'instant de mesure étant associés :

      - un biais ($m_k$), déterminé au cours d'une itération précédente ou au cours de l'initialisation ;
      - un seuil de dispersion ($v_{th,k}$), déterminé au cours d'une itération précédente ou au cours de l'initialisation ;

   c) association d'une plage temporelle d'analyse ($\Delta t_k$) à l'instant de mesure ($t_k$), et calcul d'un indicateur de dispersion ($v_k$), représentant une dispersion des signaux acquis pendant la plage temporelle d'analyse ;
   d) comparaison de l'indicateur de dispersion calculé lors de l'étape c) avec le seuil de dispersion ($v_{th,k}$) associé à l'instant de mesure ($t_k$) ;
   e) en fonction de la comparaison effectuée lors de l'étape d), maintien du biais ($m_k$) associé à l'instant de mesure à une valeur inchangée ou mise à jour dudit biais, la mise à jour du biais comportant également une mise à jour du seuil de dispersion ($v_{th,k}$), en fonction de l'indicateur de dispersion ($v_k$) calculé lors de l'étape c) ;
   f) soustraction du biais ($m_k$) résultant de l'étape e) au signal acquis ($s_k$) lors de l'étape b) ;
   g) réitération des étapes b) à f) en incrémentant l'instant de mesure ($t_k$) ;

   le procédé étant **caractérisé en ce que** lorsque lors de l'étape e), le biais est maintenu à une valeur inchangée, le seuil de dispersion ($v_{th,k}$) est mis à jour selon une fonction temporelle d'évolution ($f(t_k)$) entre deux itérations successives des étapes b) à f).

2. Procédé selon la revendication 1, dans lequel lors de l'étape e), le biais ($m_k$) est mis à jour lorsque l'indicateur de dispersion ($v_k$) franchit le seuil de dispersion ($v_{th,k}$).

3. Procédé selon l'une quelconque des revendications 1 à 2, dans lequel lors de l'étape e), lors de la mise à jour du seuil de dispersion ($v_{th,k}$), ce dernier est remplacé par l'indicateur de dispersion ($v_k$) calculé à l'instant de mesure, lors de l'étape c).

4. Procédé selon l'une quelconque des revendications 1 à 3, dans lequel l'indicateur de dispersion ($v_k$) calculé lors de l'étape c) est d'autant plus élevé que les signaux formant la plage temporelle d'analyse ($\Delta t_k$) ont des valeurs dispersées, auquel cas lors de l'étape e), le biais ($m_k$) est mis à jour lorsque l'indicateur de dispersion ($v_k$) est inférieur au seuil de dispersion ($v_{th,k}$).

5. Procédé selon l'une quelconque des revendications 1 à 3, dans lequel l'indicateur de dispersion ($v_k$) calculé lors de l'étape c) est d'autant plus faible que les signaux formant la plage temporelle d'analyse ($\Delta t_k$) ont des valeurs dispersées, auquel cas lors de l'étape e), le biais ($m_k$) est mis à jour lorsque l'indicateur de dispersion ($v_k$) est supérieur au seuil de dispersion ($v_{th,k}$).

6. Procédé selon l'une quelconque des revendications 1 à 5, dans lequel lors de l'étape d), l'indicateur de dispersion est calculé en fonction :

   - d'un moment d'ordre supérieur à 1 d'une dis-

tribution des signaux ($s_k$) acquis au cours de la plage temporelle d'analyse ($\Delta t_k$), le moment pouvant être un moment centré ou un moment centré réduit ;
- ou d'un écart entre une valeur maximale ($max_k$) et une valeur minimale ($min_k$) des signaux ($s_k$) acquis au cours de la plage temporelle d'analyse ($\Delta t_k$).

7. Procédé selon l'une quelconque des revendications 1 à 6, dans lequel lors de l'étape e), la mise à jour du biais comprend l'association d'une plage temporelle d'estimation ($\Delta' t_k$) à l'instant de mesure ($t_k$), la mise à jour du biais ($m_k$) étant réalisée en fonction d'une valeur représentative des signaux ($s_k$) mesurés au cours de ladite plage temporelle d'estimation.

8. Procédé selon la revendication 7, dans lequel l'étape e) comporte une estimation de la valeur moyenne ou de la valeur médiane des signaux générés par le capteur au cours de la plage temporelle d'estimation ($\Delta' t_k$).

9. Procédé selon l'une quelconque des revendications 7 ou 8, dans lequel la plage temporelle d'analyse ($\Delta t_k$) et la plage temporelle d'estimation ($\Delta' t_k$) sont confondues.

10. Procédé selon l'une quelconque des revendications précédentes, dans lequel le capteur (10) est un capteur de mouvement, le signal ($s_k$) généré par le capteur à chaque instant de mesure ($t_k$) étant représentatif d'un mouvement du capteur audit instant de mesure.

11. Procédé selon la revendication 10, dans lequel le capteur (10) est un gyromètre.

12. Procédé selon l'une quelconque des revendications précédentes, dans lequel deux itérations successives sont effectuées tous les *n* instants de mesure, *n* étant un entier strictement supérieur à 1.

13. Capteur (10) apte à délivrer un signal ($s_k$) à différents instants de mesure ($t_k$), le capteur étant relié à un processeur (20) configuré pour mettre en oeuvre les étapes b) à g) du procédé objet de l'une quelconque des revendications 1 à 12, à différents instants de mesure ($t_k$), après une phase d'initialisation correspondant à l'étape a) dudit procédé.

14. Capteur (10) selon la revendication 13, le capteur étant un capteur de mouvement apte à générer, à chaque instant de mesure, un signal ($s_k$) représentatif d'un mouvement du capteur audit instant de mesure ($t_k$).

**Patentansprüche**

1. Verfahren zur Verarbeitung von Signalen, die von einem Sensor (10) erzeugt wurden, wobei jedes Signal ($s_k$) einem Messzeitpunkt ($t_k$) zugeordnet ist, wobei das Verfahren die folgenden Schritte umfasst:

    a) während einer Initialisierungsphase, Definition eines Anfangs-Streuungsschwellenwertes ($v_{th,0}$) und eines Anfangs-Bias, wobei dieses Letztere null sein kann;
    b) Erfassung eines Signals ($s_k$) zu einem Messzeitpunkt ($t_k$), wobei dem Messzeitpunkt zugeordnet sind:

       - ein Bias ($m_k$), das während einer vorhergehenden Iteration oder während der Initialisierung bestimmt wurde;
       - ein Streuungsschwellenwert ($v_{th,k}$), der während einer vorhergehenden Iteration oder während der Initialisierung bestimmt wurde;

    c) Zuordnung eines Analysezeitbereichs ($\Delta t_k$) zu dem Messzeitpunkt ($t_k$) und Berechnung eines Streuungsindikators ($v_k$), der eine Streuung der erfassten Signale während des Analysezeitbereichs repräsentiert;
    d) Vergleich des in Schritt c) berechneten Streuungsindikators mit dem Streuungsschwellenwert ($v_{th,k}$), der dem Messzeitpunkt ($t_k$) zugeordnet ist;
    e) in Abhängigkeit von dem in Schritt d) durchgeführten Vergleich, Beibehaltung eines unveränderten Wertes des Bias ($m_k$), das dem Messzeitpunkt zugeordnet ist, oder Aktualisierung des Bias, wobei die Aktualisierung des Bias auch eine Aktualisierung des Streuungsschwellenwertes ($v_{th,k}$) in Abhängigkeit von dem in Schritt c) berechneten Streuungsindikator ($v_k$) umfasst;
    f) Subtraktion des aus Schritt e) resultierenden Bias ($m_k$) von dem in Schritt b) erfassten Signal ($s_k$);
    g) iterative Wiederholung der Schritte b) bis f) mit Inkrementierung des Messzeitpunktes ($t_k$);

wobei das Verfahren **dadurch gekennzeichnet ist, dass**, wenn in Schritt e) ein unveränderter Wert des Bias beibehalten wird, der Streuungsschwellenwert ($v_{th,k}$) gemäß einer Zeitfunktion der Entwicklung $f(t_k)$) zwischen zwei aufeinander folgenden Iterationen der Schritte b) bis f) aktualisiert wird.

2. Verfahren nach Anspruch 1, wobei in Schritt e) das Bias ($m_k$) aktualisiert wird, wenn der Streuungsindikators ($v_k$) den Streuungsschwellenwert ($v_{th,k}$) überschreitet.

3. Verfahren nach einem der Ansprüche 1 bis 2, wobei in Schritt e) bei der Aktualisierung des Streuungsschwellenwertes ($v_{th,k}$) dieser Letztere durch den Streuungsindikator ($v_k$) ersetzt wird, der in Schritt c) zu dem Messzeitpunkt berechnet wurde.

4. Verfahren nach einem der Ansprüche 1 bis 3, wobei der in Schritt c) berechnete Streuungsindikator ($v_k$) umso höher ist, je mehr die Signale, welche den Analysezeitbereich ($\Delta t_k$) bilden, gestreute Werte haben, wobei in diesem Fall in Schritt e) das Bias ($m_k$) aktualisiert wird, wenn der Streuungsindikator ($v_k$) kleiner als der Streuungsschwellenwert ($v_{th,k}$) ist.

5. Verfahren nach einem der Ansprüche 1 bis 3, wobei der in Schritt c) berechnete Streuungsindikator ($v_k$) umso niedriger ist, je mehr die Signale, welche den Analysezeitbereich ($\Delta t_k$) bilden, gestreute Werte haben, wobei in diesem Fall in Schritt e) das Bias ($m_k$) aktualisiert wird, wenn der Streuungsindikator ($v_k$) größer als der Streuungsschwellenwert ($v_{th,k}$) ist.

6. Verfahren nach einem der Ansprüche 1 bis 5, wobei in Schritt d) der Streuungsindikator berechnet wird in Abhängigkeit:

   - von einem Moment einer Ordnung größer als 1 einer Verteilung der Signale ($s_k$), die während des Analysezeitbereichs ($\Delta t_k$) erfasst wurden, wobei das Moment ein zentrales Moment oder ein reduziertes zentrales Moment sein kann;
   - oder von einer Abweichung zwischen einem maximalen Wert ($max_k$) und einem minimalen Wert ($min_k$) der Signale ($s_k$), die während des Analysezeitbereichs ($\Delta t_k$) erfasst wurden.

7. Verfahren nach einem der Ansprüche 1 bis 6, wobei in Schritt e) die Aktualisierung des Bias die Zuordnung eines Schätzungszeitbereichs ($\Delta' t_k$) zu dem Messzeitpunkt ($t_k$) umfasst, wobei die Aktualisierung des Bias ($m_k$) in Abhängigkeit von einem Wert durchgeführt wird, der für die während des Schätzungszeitbereichs gemessenen Signale ($s_k$) repräsentativ ist.

8. Verfahren nach Anspruch 7, wobei Schritt e) eine Schätzung des Mittelwertes oder des Medianwertes der von dem Sensor während des Schätzungszeitbereichs ($\Delta' t_k$) erzeugten Signale umfasst.

9. Verfahren nach einem der Ansprüche 7 oder 8, wobei der Analysezeitbereich ($\Delta t_k$) und der Schätzungszeitbereich ($\Delta' t_k$) zusammenfallen.

10. Verfahren nach einem der vorhergehenden Ansprüche, wobei der Sensor (10) ein Bewegungssensor ist, wobei das von dem Sensor zu jedem Messzeitpunkt ($t_k$) erzeugte Signal ($s_k$) für eine Bewegung des Sensors zu dem Messzeitpunkt repräsentativ ist.

11. Verfahren nach Anspruch 10, wobei der Sensor (10) ein Gyrometer ist.

12. Verfahren nach einem der vorhergehenden Ansprüche, wobei alle $n$ Messzeitpunkte zwei aufeinander folgende Iterationen durchgeführt werden, wobei $n$ eine ganze Zahl streng größer als 1 ist.

13. Sensor (10), welcher in der Lage ist, zu verschiedenen Messzeitpunkten ($t_k$) ein Signal ($s_k$) zu liefern, wobei der Sensor mit einem Prozessor (20) verbunden ist, der dafür ausgelegt ist, die Schritte b) bis g) des Verfahrens, das Gegenstand eines der Ansprüche 1 bis 12 ist, zu verschiedenen Messzeitpunkten ($t_k$) durchzuführen, nach einer Initialisierungsphase, die Schritt a) des Verfahrens entspricht.

14. Sensor (10) nach Anspruch 13, wobei der Sensor ein Bewegungssensor ist, der in der Lage ist, zu jedem Messzeitpunkt ein Signal ($s_k$) zu erzeugen, das für eine Bewegung des Sensors zu dem Messzeitpunkt ($t_k$) repräsentativ ist.

**Claims**

1. Method for processing signals generated by a sensor (10), each signal ($s_k$) being associated with a measurement time ($t_k$), the method comprising the following steps:

   a) during an initialization phase, defining an initial dispersion threshold ($v_{th,0}$) and an initial bias, the latter possibly being zero;
   b) acquiring a signal ($s_k$) at a measurement time ($t_k$), the measurement time being associated with:

      - a bias ($m_k$), determined in a preceding iteration or during the initialization;
      - a dispersion threshold ($v_{th,k}$), determined in a preceding iteration or during the initialization;

   c) associating an analysis time range ($\Delta t_k$) with the measurement time ($t_k$), and computing a dispersion indicator ($v_k$), representing a dispersion of the signals acquired during the analysis time range;
   d) comparing the dispersion indicator computed in step c) with the dispersion threshold ($v_{th,k}$) associated with the measurement time ($t_k$);
   e) depending on the comparison carried out in step d), keeping the bias ($m_k$) associated with the measurement time at an unchanged value or updating said bias, the update of the bias also comprising an update of the dispersion threshold ($v_{th,k}$), depending on the dispersion indicator ($v_k$) computed in step c);

f) subtracting the bias ($m_k$) resulting from step e) from the signal ($s_k$) acquired in step b);

g) reiterating steps b) to f) while incrementing the measurement time ($t_k$);

the method being **characterized in that** when, in step e), the bias is kept at an unchanged value, the dispersion threshold ($v_{th,k}$) is updated using a time-dependent variation function ($f(t_k)$) between two successive iterations of steps b) to f).

2. Method according to Claim 1, wherein, in step e), the bias ($m_k$) is updated when the dispersion indicator ($v_k$) crosses the dispersion threshold ($v_{th,k}$).

3. Method according to any one of Claims 1 to 2, wherein, in step e), during the update of the dispersion threshold ($v_{th,k}$), the latter is replaced by the dispersion indicator ($v_k$) computed at the measurement time, in step c).

4. Method according to any one of Claims 1 to 3, wherein the dispersion indicator ($v_k$) computed in step c) increases as the dispersion of the values of the signals forming the analysis time range ($\Delta t_k$) increases, in which case, in step e), the bias ($m_k$) is updated when the dispersion indicator ($v_k$) is lower than the dispersion threshold ($v_{th,k}$).

5. Method according to any one of Claims 1 to 3, wherein the dispersion indicator ($v_k$) computed in step c) decreases as the dispersion of the values of the signals forming the analysis time range ($\Delta t_k$) decreases, in which case, in step e), the bias ($m_k$) is updated when the dispersion indicator ($v_k$) is higher than the dispersion threshold ($v_{th,k}$).

6. Method according to any one of Claims 1 to 5, wherein, in step d), the dispersion indicator is computed depending on:

- a moment of order higher than 1 of a distribution of the signals ($s_k$) acquired in the analysis time range ($\Delta t_k$), the moment possibly being a central moment or a standardised central moment;
- or on a deviation between a maximum value ($max_k$) and a minimum value ($min_k$) of the signals ($s_k$) acquired in the analysis time range ($\Delta t_k$).

7. Method according to any one of Claims 1 to 6, wherein, in step e), the update of the bias comprises associating an estimation time range ($\Delta' t_k$) with the measurement time ($t_k$), the update of the bias ($m_k$) being carried out depending on a value representative of the signals ($s_k$) measured in said estimation time range.

8. Method according to Claim 7, wherein step e) comprises estimating the mean value or the median value of the signals generated by the sensor in the estimation time range ($\Delta' t_k$).

9. Method according to either one of Claims 7 and 8, wherein the analysis time range ($\Delta t_k$) and the estimation time range ($\Delta' t_k$) are coincident.

10. Method according to any one of the preceding claims, wherein the sensor (10) is a movement sensor, the signal ($s_k$) generated by the sensor at each measurement time ($t_k$) being representative of a movement of the sensor at said measurement time.

11. Method according to Claim 10, wherein the sensor (10) is a gyrometer.

12. Method according to any one of the preceding claims, wherein two successive iterations are carried out every $n$ measurement times, $n$ being an integer strictly higher than 1.

13. Sensor (10) able to deliver a signal ($s_k$) at various measurement times ($t_k$), the sensor being connected to a processor (20) configured to implement steps b) to g) of the method that is the subject of any one of Claims 1 to 12, at various measurement times ($t_k$), after an initialization phase corresponding to step a) of said method.

14. Sensor (10) according to Claim 13, the sensor being a movement sensor able to generate, at each measurement time, a signal ($s_k$) representative of a movement of the sensor at said measurement time ($t_k$).

**Fig. 1A**

**Fig. 1B**

**Fig. 1C**

**Fig. 2A**

$$v_{th,k+1} = v_{th,k}$$

$$m_{k+1} = m_k$$

$$v_{th,0}$$
$$m_0$$

$$s_k \quad \Delta t_k$$

$$v_k$$

$$v_k < v_{th,k}$$

$$v_k \geq v_{th,k}$$

$$v_{th,k} = v_k$$

$$\Delta t'_k$$

$$m_k$$

$$v_{th,k} = f(k)$$

$$k = k+1$$

$$s_k\text{-}m_k$$

**Fig. 2B**

**Fig. 3A**

**Fig. 3B**

**RÉFÉRENCES CITÉES DANS LA DESCRIPTION**

**Documents brevets cités dans la description**

- US 20110178707 A
- EP 0496172 A
- EP 3006897 A
- US 20110172820 A
- US 20140229135 A
- US 20070136019 A
- WO 2012177323 A